# EUROPÄISCHE PATENTSCHRIFT

(11) **EP 2 362 503 B1**
(45) Veröffentlichungstag und Bekanntmachung des Hinweises auf die Patenterteilung: **26.10.2016**
(21) Anmeldenummer: 11401015.0
(22) Anmeldetag: 11.02.2011
(51) Int. Cl.: H01S 3/081, H01S 3/07, H01S 3/094, H01S 3/109, H01S 3/11, H01S 3/08, H01S 3/06, H01S 3/0941

(54) **Laseranordnung**
Laser assembly
Agencement laser

(30) Priorität: 23.02.2010 DE 102010009048
(43) Veröffentlichungstag der Anmeldung: 31.08.2011
(73) Patentinhaber: LPKF Laser & Electronics AG, 30827 Garbsen (DE)
(72) Erfinder: Kusnezow, Gennadij, 30855, Langenhagen (DE); Boenke, Andreas, 30459, Hannover (DE)
(74) Vertreter: Scheffler, Jörg

(56) Entgegenhaltungen:
- FR-A1- 2 929 766
- US-A- 3 921 096
- US-A- 5 052 815
- US-A1- 2007 047 600
- US-A1- 2007 201 532
- US-B1- 6 678 308

## Beschreibung

Die Erfindung betrifft eine Laseranordnung, insbesondere einen Festkörperlaser, mit zumindest einem aktiven Medium in einem Resonator mit zwei jeweils einen Resonatorspiegel aufweisenden Resonatorzweigen, die mittels eines optischen Systems durch ein gemeinsames Objektiv einseitig gepumpt sind, wobei das Objektiv ein Faltungselement für eine V-Anordnung der Resonatorzweige bildet.

Bei Festkörperlasern tritt das Problem auf, dass das aktive Medium eine thermisch induzierte Brechkraft für durchgehendes Licht aufweist. Der Pumpprozess führt zu einer Temperaturerhöhung im Medium, da nur ein Teil der absorbierten Pumpleistung in nutzbare Strahlung umgesetzt und der Rest in Form von Wärme an das Material abgegeben wird. Gleichzeitiges Kühlen der Außenflächen führt zu einem Temperaturprofil. Dieses hat aufgrund der Temperaturabhängigkeit des Brechungsindex und der thermooptischen Spannung ein Brechungsindexprofil zur Folge.

Grundsätzlich kann jeder thermischen Linse mit geeigneten Resonatoren begegnet werden. Allgemein bekannt ist die Möglichkeit, eine konkave Endfläche an ein Ende oder an beide Enden eines Laserstabs anzuschleifen, eine einzelne negative Linse in den Resonator einzufügen oder ganz allgemein eine geeignete Resonatorkonfiguration zu wählen. Schwierigkeiten entstehen insbesondere bei der Suche nach geeigneten Resonatoren für den gesamten Bereich der Pumpleistung von der Laserschwelle (die selbst stark vom gewählten Resonator abhängt) bis hin zur maximalen Pumpleistung.

Die longitudinale Anregung von diodenlasergepumpten Festkörperlasern bietet entscheidende Vorteile gegenüber dem transversalen Pumpen. Dabei wird eine von Halbleiterlasern emittierte Strahlung in Richtung der Lasermodenachse bzw. bei einem Verstärker in Richtung des Oszillatorstrahls eingekoppelt, sodass sich eine optimale Überlappung des Pumpstrahlvolumens mit dem Modenvolumen oder mit dem zu verstärkenden Strahl im Verstärker ergibt. Aufgrund der optimalen Überlappung des Pumpstrahlvolumens mit dem Modenvolumen ergibt sich ein höherer Wirkungsgrad. Hinzu kommt, dass eine verbesserte Strahlqualität erzielt werden kann, da nur die fundamentale Lasermode angeregt wird.

Die US 2005/0152426 A1 betrifft ein Verfahren zum Pumpen eines Laserresonators mit Laserdioden, bei dem die longitudinalen Endflächen des Resonators spezifische optische Eigenschaften haben. Die Wellenlängen des Lasers werden von den Endflächen nicht und die Wellenlänge des Pumpstrahls teilweise reflektiert.

Aus der WO 96/05637 A1 ist ein mit einer Wärmequelle thermisch gekoppeltes Element zur Kompensation einer durch den Laserstrahl hervorgerufenen Verformung der im Strahlengang des Lasersystems angeordneten Elemente bekannt.

Die EP 0 202 322 A1 beschreibt optische Elemente mit geeigneter, von der Temperatur abhängiger Variation des Brechungsindex und der Längenausdehnung, die mit einer Wärmequelle gekoppelt sind, um in ihnen gezielt Effekte der thermischen Linse und der thermischen Doppelbrechung zur Kompensation der thermischen Doppelbrechung in Festkörperlasermedien zu erzeugen.

Die DE 197 14 175 A1 betrifft ein optisches Element zur Kompensation der thermischen Linse in optisch gepumpten Festkörperlasermedien. Die Kompensation der thermischen Linse wird dadurch erreicht, dass ein Teil des Pumplichts selbst mit seiner variierenden Leistung genutzt wird, um ein entsprechendes, die thermische Linse im aktiven Medium kompensierendes optisches Element zu schaffen. Dieses Element soll entweder ein modifizierter Einkoppelspiegel oder ein als Linse mit negativer (im Falle einer negativen thermischen Linse im Lasermedium positiver) Brennweite wirkendes zusätzlich eingefügtes Element sein.

US20070201532 A offenbart eine Laseranordnung mit einem longitudinal diodengepumpten Festkörperlaser, der ein aktives Medium innerhalb eines V-förmigen gefalteten Resonators enthält, wobei der gefalteter Resonator zwei über ein für die Grundwellenlänge hochreflektierendes Faltungselement verbundene Resonatorzweige enthält.

Eine erste Variante betrifft einen speziellen Einkoppelspiegel, der aus einem Substrat mit geeigneter Absorption für die Pumpstrahlung und positivem oder negativem thermischen Ausdehnungskoeffizienten gefertigt ist, und der aufgrund der sich ausbildenden Krümmung der Spiegelendfläche als konvexer bzw. konkaver Spiegel für die Resonatormode wirkt.

Eine zweite Variante betrifft eine vorzugsweise antireflexionsbeschichte Platte, die einen negativen oder positiven thermischen Koeffizienten des Brechungsindex und eine geeignete Absorption für die Pumpwellenlänge sowie geringe Verluste für die Laserwellenlänge aufweist.

Die DE 10 2007 023 298 A1 betrifft diodengepumpte Laser, bei denen eine Pumpstrahlung mit einem ersten linearen Polarisationszustand auf ein Verstärkermedium entlang einer Pumpachse gerichtet wird. Die Laserachse kann eine innere Achse einer Laserkavität oder eine Achse sein, entlang der Laserstrahlung ausgegeben wird. Die Pumpachse ist gefaltet, um entlang der Laserachse zu verlaufen, sobald die Pumpstrahlung in der Laserkavität empfangen wird.

Ferner betrifft die US 7,016,389 B2 einen Laser mit einem aktiven Medium, welches von entgegengesetzten Seiten her gepumpt wird.

Der Erfindung liegt die Aufgabe zugrunde, eine Möglichkeit zu schaffen, eine optimale Strahlqualität sowie eine hohe Leistung auf einfache Weise zu realisieren.

Diese Aufgabe wird erfindungsgemäß mit einer Laseranordnung gemäß den Merkmalen des Anspruchs 1 gelöst mit einem aktiven Medium in einem Resonator, der zwei jeweils einen Resonatorspiegel aufweisende Resonatorzweige umfasst, die mittels eines optischen Systems durch ein gemeinsames Objektiv einseitig gepumpt sind, wobei das Objektiv ein Faltungselement für eine V-Anordnung der Resonatorzweige aufweist. Die Erfindung geht dabei von der Erkenntnis aus, dass dann in einfacher Weise die Leistung erhöht und die Strahlqualität des Lasers verbessert werden kann, wenn die Faltung des Resonators mit nur einem Element, dem Objektiv, realisiert wird, in welches die Pumpenergie gemeinsam eingekoppelt wird, wobei je Resonatorzweig ein aktives Volumen angeordnet ist. Hierdurch wird ein einfach zu realisierender konstruktiver Aufbau geschaffen, der mit einer vergleichsweise geringen Anzahl von Bauelementen auskommt. Die Pumpenergie kann dabei mittels Lichtwellenleitern von einer gemeinsamen Seite zugeführt werden, ohne dass hierzu eine starke Biegung der Lichtwellenleiter erforderlich ist. Das Faltungselement ist dabei hochtransmissiv für die Wellenlänge der Pumpenergie und hochreflektiv für die Grundwellenlänge. Durch die minimale Anzahl der optischen Komponenten werden zugleich die in der Praxis auftretenden Verluste minimiert. Das einem jeweiligen Resonatorzweig zugeordnete aktive Volumen ist dabei vorzugsweise zentrisch und koaxial zu den optischen Achsen des betreffenden Resonatorzweiges positioniert und ausgerichtet. Insbesondere sind die aktiven Volumina räumlich getrennt. Eine Überlappung bzw. ein Überlappungsbereich der aktiven Volumina der Resonatorzweige wird dabei vermieden. Durch den größtmöglichen Überlapp der aktiven Volumina und der sich ausbildenden Resonatormode wird eine höhere Effizienz erreicht.

Erfindungsgemäss weist der Reflektor eine konvexe, sphärisch gekrümmte Oberfläche auf.

Durch die als konvexer Faltungsspiegel wirkende äußere Oberfläche des das Einkopplungselement bildenden, die Pumpleistung einkoppelnden Objektivs wird die Reduzierung der gemeinsamen optischen Kraft der thermischen Linse bewirkt.

Eine weitere, Ausführung, die nicht unter die vorliegenden Ansprüche fällt, wird auch dadurch realisiert, dass zumindest ein aktives Medium eine sphärische Stirnfläche aufweist. Hierdurch wird die aufgrund der Leistungsdichte der Pumpleistung auftretende, starke positive thermische Linse im Bereich der entstehenden thermischen Linse ausgeglichen. Hierzu wird durch die zum Beispiel konkav gekrümmte, als negative Linse wirkende End- bzw. Stirnfläche des aktiven Mediums die thermische Linse kompensiert.

Wenn gemäß einer besonders praxisnahen Abwandlung der Erfindung der Reflektor durch eine Außenseite einer Fokussieroptik des Objektivs gebildet ist, kann die Anzahl der erforderlichen optischen Bauelemente weiter reduziert werden, indem der Reflektor durch die den Resonatorzweigen zugewandte Fläche der Fokussierlinse gebildet ist.

Weiterhin ist es von Vorteil, wenn der Reflektor als ein separater Faltungsspiegel, insbesondere als ein Meniskus-Faltungsspiegel, ausgeführt ist, um so eine Trennung der Funktionen beispielsweise für eine unabhängige Justage des die Pumpleistung abbildenden Systems einerseits sowie des konvexen Faltungselements andererseits zu erreichen.

Dabei ist es vorteilhaft, den Faltungswinkel so klein wie möglich zu halten und so einen Astigmatismus zu vermeiden. Die Resonatorzweige sind dabei so angeordnet, dass der zwischen ihnen eingeschlossene Faltungswinkel insbesondere ca. 4° beträgt.

Die Pumpleistung wird in an sich bekannter Weise mittels separater Lichtwellenleiter zugeführt, wobei jedem Lichtwellenleiter noch eine zusätzliche eigene Fokussier- bzw. Kollimieroptik des optischen Pumpabbildungssystems zugeordnet sein kann.

Weiterhin ist es besonders Erfolg versprechend, wenn der Laser zumindest ein zwischen den Fokussieroptiken und dem Objektiv angeordnetes Umlenkelement, insbesondere umfassend einen Umlenkspiegel und/oder ein Prisma, aufweist. Hierdurch kann ein kleiner Faltungswinkel der Resonatorzweige zur Vermeidung von Astigmatismus realisiert werden, ohne dass dies zugleich zu einer konstruktiv aufwendigen bzw. nachteiligen Anordnung der optischen Systeme bei der Zuführung der Pumpleistung führt, die anderenfalls entsprechend den großen Durchmessern der Faserkollimatoren oder der Faserabbildungsoptik in einem großen Abstand von dem durch das Objektiv gebildeten Einkoppelelement angeordnet werden müssten. Die Ablenkung an dem Umlenkelement, vorzugsweise einem Umlenkspiegel oder einem Prisma, die benachbart der durch die Resonatorzweige bestimmten Symmetrieachse positioniert werden können, ermöglicht so eine kompakte Ausführungsform.

In ähnlicher Weise kann der gewünschte Effekt auch dadurch erreicht werden, dass das Umlenkelement transmissiv, insbesondere als zumindest ein Faltungskeil, ausgeführt ist, um so die gewünschte Ablenkung zu erreichen.

Vorzugsweise liegt die Abbildungsebene bei der Abbildung von Zwischenbildern nahe der Symmetrieachse, um den kleinen Faltungswinkel zu ermöglichen. Dazu kann die Umlenkung in dem Bereich erfolgen, in dem die Pumpstrahlen räumlich getrennt sind.

Besonders vorteilhaft ist es auch, wenn die Zuführung der Pumpleistung mittels paralleler Lichtwellenleiter, insbesondere mit in einer Ebene angeordneten Stirnflächen der Lichtwellenleiter, erfolgt und das optische System eine telezentrische Abbildungsoptik aufweist, weil dadurch eine besonders kompakte Bauform und eine weitere Vereinfachung des optischen Systems erreicht werden kann.

Die erfindungsgemäße Laseranordnung kann selbstverständlich mit jeweils einem aktiven Medium in jedem Resonatorzweig realisiert werden. Eine Ausführungsform wird hingegen auch dadurch erreicht, dass die mittels separater Lichtwellenleiter zugeführte Pumpenergie in ein gemeinsames aktives Medium angekoppelt wird. Durch die Verwendung nur eines gemeinsamen aktiven Mediums wird es möglich, dessen Abstand zu dem als Faltungsspiegel dienenden Reflektor sowie auch die Baugröße des optischen Systems weiter zu reduzieren.

Alternativ kann gemäß einer weiteren besonders praxisnahen Abwandlung das optische System zur Aufteilung der mittels eines Lichtwellenleiters zugeführten Pumpenergie in zwei Teilstrahlen ausgeführt sein.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung einer einen gefalteten Resonator aufweisenden Laseranordnung in
- Fig. 1: Laseranordnung, die nicht von den derzeitigen Ansprüchen gedeckt wird: jeweils ein den Resonatorzweigen zugeordnetes aktives Medium sowie eine Fokussieroptik und einen Faltungsspiegel mit einer planen Außenfläche;
- Fig. 2: jeweils ein den Resonatorzweigen zugeordnetes aktives Medium sowie eine Fokussieroptik und einen gekrümmten Faltungsspiegel eines Objektivs;
- Fig. 3: eine Variante, bei welcher der Reflektor als ein separater Meniskus-Faltungsspiegel ausgeführt ist;
- Fig. 4: die Anordnung eines Umlenkelements zwischen der jeweiligen Fokussieroptik und dem Objektiv;
- Fig. 5: die Anordnung eines Faltungskeils zwischen dem jeweiligen Lichtwellenleiter und dem Objektiv;
- Fig. 6: eine Variante, bei der die mittels zwei Lichtwellenleitern zugeführte Pumpenergie in ein gemeinsames aktives Medium eingekoppelt wird;
- Fig. 7: eine Variante, bei der die mittels eines einzigen Lichtwellenleiters zugeführte Pumpenergie in ein gemeinsames aktives Medium eingekoppelt wird;
- Fig. 8: eine nach dem in Figur 5 dargestellten Prinzip aufgebaute Variante mit zwei in einer gemeinsamen Ebene angeordneten V-Anordnungen mit insgesamt vier Resonatorzweigen;
- Fig. 9: eine Variante mit vier die Pumpenergie in ein gemeinsames Objektiv einkoppelnden Lichtwellenleitern ;
- Fig. 10: eine Variante mit einem nichtlinearen Modul in einem Resonatorzweig;

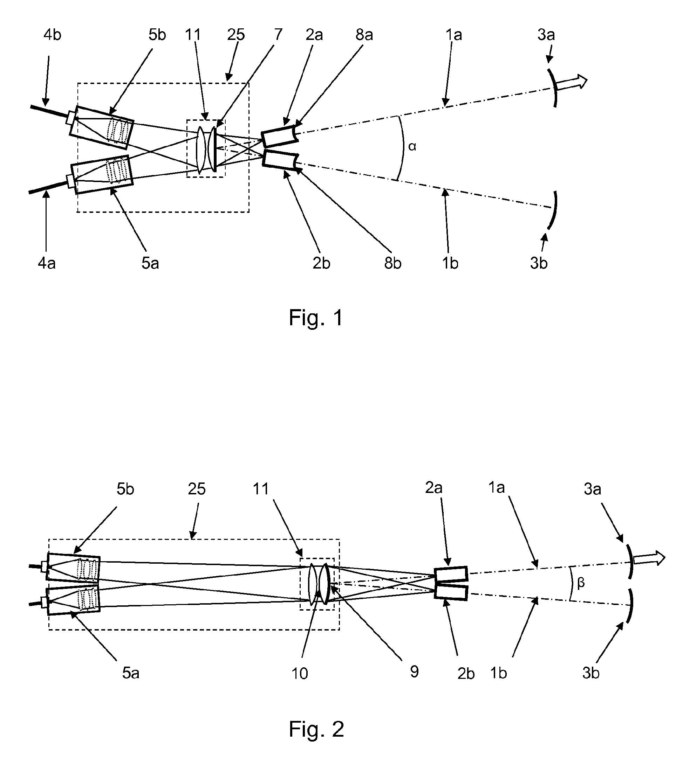

Figur 1 zeigt eine Laseranordnung, die nicht von den vorliegenden Ansprüchen gedeckt wird, wie sie insbesondere in einem Festkörperlaser zur Anwendung kommen kann. Die Laseranordnung weist einen gefalteten Resonator mit einem **Faltungswinkel α zwischen den Resonatorzweigen 1a, 1b auf, die jeweils ein aktives Medium** 2a, 2b sowie einen Resonatorspiegel 3a, 3b aufweisen. Die mittels separater Lichtwellenleiter 4a, 4b zugeführte Pumpleistung wird mittels einer jeweiligen Kollimieroptik 5a, 5b durch ein Objektiv 11, welches ein Faltungselement 7 mit einer planen Außenfläche aufweist, einseitig gepumpt. Die beiden Kollimieroptiken 5a, 5b bilden gemeinsam mit dem Objektiv 11 ein Pumpabbildungssystem 25. Die beiden aktiven Medien 2a, 2b weisen jeweils eine dem zugeordneten Resonatorspiegel 3a, 3b zugewandte sphärische Stirnfläche 8a, 8b auf, um so die in den aktiven Medien entstehende thermische Linse nach Bedarf zu kompensieren.

Demgegenüber ist in der in Figur 2 gezeigten erfindungsgemässen Ausführung das Faltungselement als ein sphärisch gekrümmtes Faltungselement 9 einer Linse 10 des Objektivs 11 ausgeführt, durch welches die Resonatorzweige 1a, 1b mittels der beiden separaten Kollimieroptiken 5a, 5b einseitig gepumpt werden. Gemeinsam bilden die beiden Kollimieroptiken 5a, 5b mit dem Objektiv 11 das Pumpabbildungssystem 25. Die gekrümmte Außenseite 9 der Linse 10 ist dabei entsprechend hochtransmissiv für die Pumpwellenlänge und hochreflektiv für die Grundwellenlänge des Lasers und kann beispielsweise durch eine geeignete Beschichtung der Linse 10 realisiert werden. Aufgrund der im Vergleich zu der in Figur 1 gezeigten Variante mittels des gekrümmten Faltungselements 9 realisierbaren Kompensation der thermischen Linse kann auf eine konkave Ausformung der Stirnflächen der beiden aktiven Medien zugunsten einer lediglich planen Beschaffenheit der Stirnflächen verzichtet werden. Dabei kann durch **einen geringen Faltungswinkel β von ca. 4° erreicht werden, dass der Astigmatismus prak**tisch nicht bemerkbar ist. Rein konstruktiv führt diese Variante jedoch zu einem vergleichsweise großen Abstand der Kollimieroptiken 5a, 5b von dem Objektiv 11.

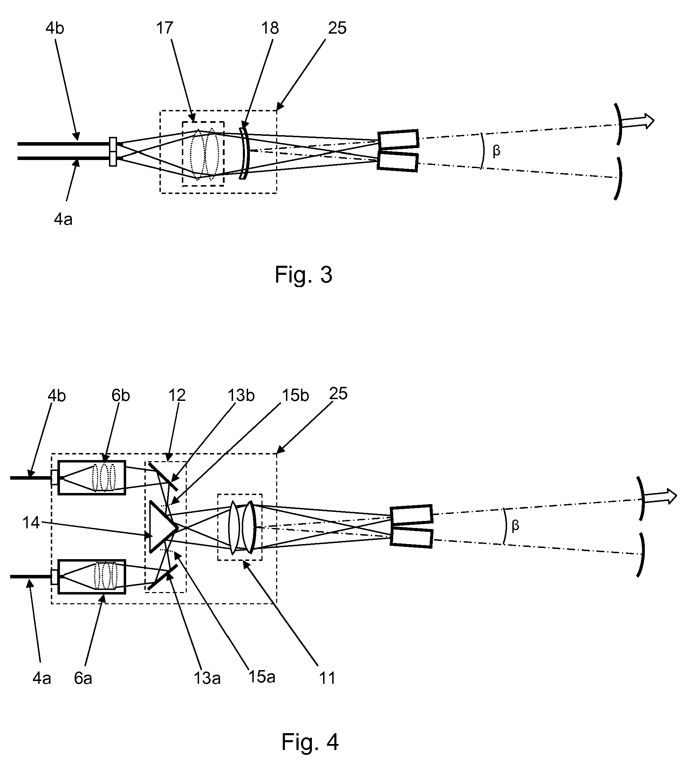

In Figur 3 ist eine Variante dargestellt, bei welcher das Faltungselement als ein separater Meniskus-Spiegel 18 ausgeführt und gemeinsam mit dem Objektiv 17 in einem Pumpabbildungssystem 25 angeordnet ist. Die Lichtwellenleiter 4a, 4b für die Zuführung der Pumpleistung sind parallel vor dem Objektiv 17 angeordnet.

Um die Baulänge zu verringern, ist bei der in Figur 4 gezeigten Variante zwischen den Fokussieroptiken 6a, 6b und dem Objektiv 11 jeweils eine zweifache Umlenkung mittels eines Umlenkelements 12 vorgesehen, welches einerseits jeweils einen der jeweiligen Fokussieroptik zugeordneten separaten Umlenkspiegel 13a, 13b, andererseits ein gemeinsames Prisma 14 als der Träger der zwei auf den Katheten-Seiten aufgebrachten Spiegel aufweist. **Hierdurch kann ein kleiner Faltungswinkel β der Resonatorzweige bei einem zugleich gerin**gen Abstand eines Faserendes des Lichtwellenleiters 4a, 4b der jeweiligen Fokussieroptik 6a, 6b von dem Objektiv 11 realisiert werden, wobei eine Abbildungsebene 15a, 15b der Faserenden im Strahlengang hinter dem Umlenkspiegel 13a, 13b und vor der weiteren Ablenkung an dem Prisma 14 liegen kann. Das Pumpabbildungssystem 25 nimmt dabei die beiden Fokussieroptiken 6a, 6b, das Umlenkelement 12 sowie das Objektiv 11 auf.

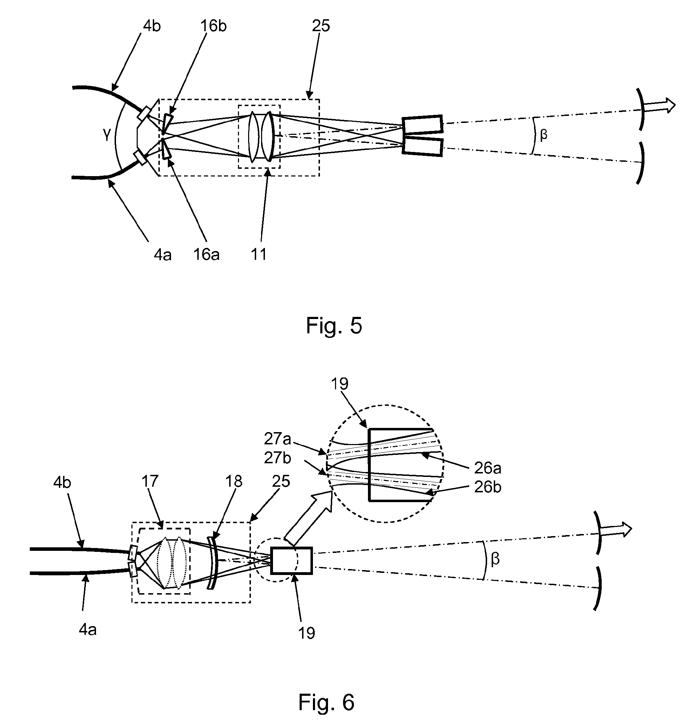

Eine ähnliche Verkürzung der Baulänge ergibt sich gemäß der in Figur 5 gezeigten Variante auch durch die Anordnung jeweils eines als ein Faltungskeil 16a, 16b ausgeführten transmissiven Umlenkelements zwischen dem jeweiligen Lichtwellenleiter 4a, 4b und dem Objek**tiv 11, um so einen größeren, zwischen den Fasern eingeschlossenen Winkel** γ **zu erreichen,** welcher eine dem Objektiv 11 angenäherte Positionierung gestattet.

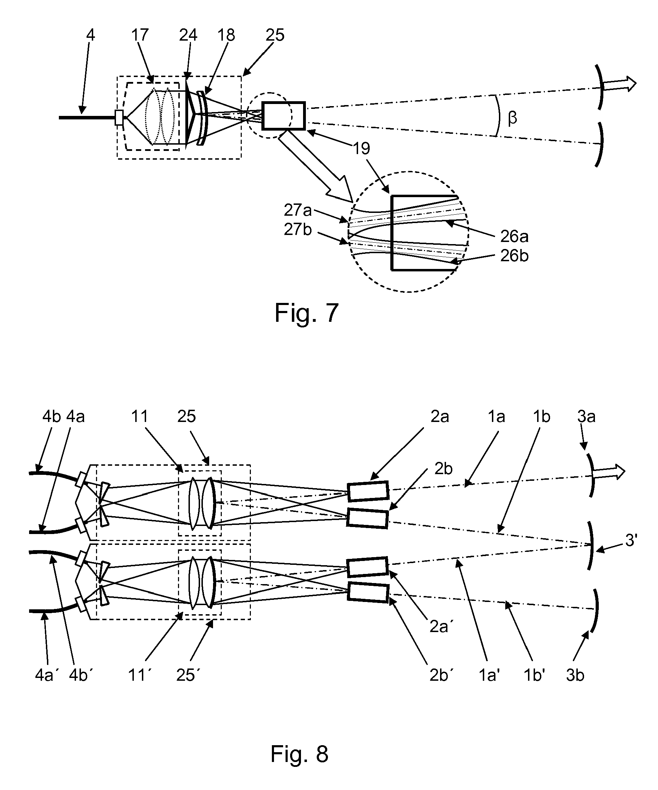

Eine demgegenüber weiter vereinfachte Abwandlung ist in den Figuren 6 und 7 gezeigt. Bei **einem an sich unveränderten oder lediglich geringfügig abweichenden Faltungswinkel β der** Resonatorzweige 1a, 1b kommt dabei lediglich ein gemeinsames aktives Medium 19 mit zwei aktiven Volumina 26a, 26b zum Einsatz. In diese aktiven Volumina 26a, 26b wird die mittels der Lichtwellenleiter 4, 4a, 4b zugeführte Pumpleistung durch das als ein Meniskus-Faltungsspiegel 18 ausgeführte Faltungselement zentrisch und koaxial zu der optischen Achse 27a, 27b des betreffenden Resonatorzweiges 1a, 1b eingekoppelt. Die Lichtleiter 4a, 4b münden dabei in ein gemeinsames Objektiv 17, welches gemeinsam mit dem Meniskus-Faltungsspiegel 18 das Pumpabbildungssystem 25 bildet. Wie zu erkennen, kann so eine weiter reduzierte Baulänge der Laseranordnung erreicht und zugleich die Anzahl der hierzu erforderlichen Bauteile vermindert werden.

Ergänzend ist in Figur 7 noch zwischen dem Objektiv 17 und dem Meniskus-Faltungsspiegel 18 ein Spaltungsprisma 24 angeordnet, sodass die Pumpenergie mittels lediglich eines einzigen Lichtwellenleiters 4 zugeführt werden kann.

In der Figur 8 ist eine Variante dargestellt, die nach dem in Figur 5 gezeigten Prinzip aufgebaut ist, wobei jedoch eine Verdopplung der Elemente vorgesehen ist. Die mittels vier separater, in einer gemeinsamen Ebene verlaufenden Lichtwellenleiter 4a, 4b, 4a', 4b' zugeführte Pumpenergie wird zwei Pumpabbildungssystemen 25, 25' zugeführt, die jeweils ein Objektiv 11, 11' einschließen. In den vier in einer gemeinsamen Ebene angeordneten Resonatorzweigen 1a, 1a', 1b, 1b' ist jeweils ein aktives Medium 2a, 2b, 2a', 2b' angeordnet, wobei den Resonatorzweigen 1a und 1b' jeweils ein Resonatorspiegel 3a, 3b und ein zusätzlicher Faltungsspiegel 3' sowohl dem Resonatorzweig 1b als auch dem Resonatorzweig 1a' zugeordnet ist.

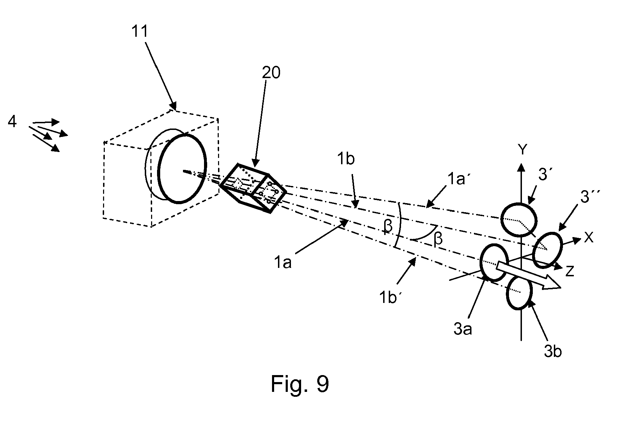

In der Figur 9 ist ergänzend noch eine Variante dargestellt, bei welcher die Pumpenergie durch vier Lichtwellenleiter 4, in ein gemeinsames Objektiv 11 analog der gezeigten Varianten eingekoppelt wird. Die Pumpenergie tritt dann in ein gemeinsames aktives Medium 20, das vier aktive Volumina aufweist, ein. Die Resonatorzweige sind bei dieser Variante in zwei senkrecht zueinander verlaufenden Ebenen X, Y (Z ist die Resonator-Symmetrieachse) angeordnet, wobei jedem Resonatorzweig ein Resonatorspiegel 3a, 3b oder ein zusätzlicher Faltungsspiegel 3', 3"zugeordnet ist.

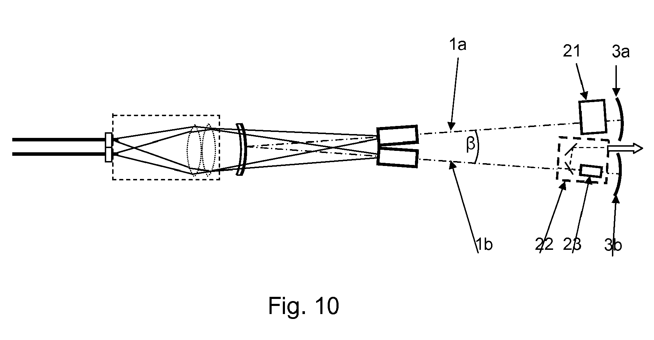

In der Figur 10 ist eine Varianten der in Figur 3 gezeigten Ausführungsform dargestellt, in deren ersten Resonatorzweig 1a jeweils ein optionaler Q-Switch 21 und in deren zweiten Resonatorzweig 1b zumindest ein Modul 22 mit zumindest einem nichtlinearen Element 23 zur Generierung einer höheren Harmonischen im Resonator vorgesehen ist.

## Patentansprüche

1. Laseranordnung, insbesondere eines longitudinal diodengepumpten Festkörperlasers, mit zumindest einem aktiven Medium (2a, 2b, 19, 20) und zumindest einer V-Anordnung zweier über ein für die Grundwellenlänge hochreflektierendes Faltungselement (9, 18) verbundener Resonatorzweige (1a, 1b) des optischen Resonators, die Laseranordung umfassend zudem ein optisches Pumpabbildungssystem (25);
wobei den beiden Resonatorzweigen (1a, 1b) jeweils ein aktives Volumen (26a, 26b) zugeordnet ist und beide mittels eines gemeinsamen Objektivs (11, 17) des Pumpabbildungssystems (25) durch das für die Pumpwellenlänge transparente Faltungselement (9, 18) einseitig gepumpt sind, wobei das zumindest eine aktive Medium (2a, 2b, 19, 20) plane Stirnflächen aufweist und das Faltungselement (9, 18) zur Reduzierung der optischen Kraft der thermischen Linse im optischen Resonator sphärisch konvex ausgeführt ist und wobei
entweder ein gemeinsames aktives Medium (19) zwei aktive Volumina (26a, 26b) aufweist, die zentrisch und koaxial zu der optischen Achse (27a, 27b) des betreffenden Resonatorzweiges (1a, 1b) positioniert und ausgerichtet sind, und das aktive Medium (19) beide Resonatorzweige (1a, 1b) umfasst
oder jeder Resonatorzweig (1a, 1b) jeweils ein aktives Medium (2a, 2b) aufweist, wobei das einem jeweiligen Resonatorzweig (1a, 1b) zugeordnete aktive Volumen (26a, 26b) zentrisch und koaxial zu der optischen Achse (27a, 27b) des betreffenden Resonatorzweiges (1a, 1b) positioniert und ausgerichtet ist.

2. Laseranordnung nach Anspruch 1, **dadurch gekennzeichnet, dass** das Faltungselement (9) als hochreflektierende Fläche der Außenseite des Objektivs (11) ausgeführt ist.

3. Laseranordnung nach Anspruch 1 oder 2, **dadurch gekennzeichnet, dass** das Faltungselement (18) als ein Spiegel, insbesondere als Meniskus-Spiegel ausgeführt ist.

4. Laseranordnung nach zumindest einem der vorhergehenden Ansprüche, **dadurch gekennzeichnet, dass** das Pumpabbildungssystem (25) zumindest eine Kollimieroptik (5a, 5b) umfasst.

5. Laseranordnung nach zumindest einem der vorhergehenden Ansprüche, **dadurch gekennzeichnet, dass** das Pumpabbildungssystem (25) zumindest eine Fokussieroptik (6a, 6b) zur Erzeugung einer Zwischenabbildung umfasst.

6. Laseranordnung nach zumindest einem der vorhergehenden Ansprüche, **dadurch gekennzeichnet, dass** die Pumpleistung mittels separater Lichtwellenleiter (4a, 4b, 4a', 4b') zuführbar ist.

7. Laseranordnung nach zumindest einem der vorhergehenden Ansprüche, **dadurch gekennzeichnet, dass** das Pumpabbildungssystem (25) zumindest ein Umlenkelement (12), beispielsweise Umlenkspiegel (13a, 13b), Prismen (14) oder optische Keile (16a, 16b) aufweist.

8. Laseranordnung nach zumindest einem der vorhergehenden Ansprüche, **dadurch gekennzeichnet, dass** die Zuführung der Pumpleistung mittels paralleler Lichtwellenleiter (4a, 4b), insbesondere mit in einer Ebene angeordneten Stirnflächen der Lichtwellenleiter (4) erfolgt und das Objektiv (11) als objektseitig telezentrische Abbildungsoptik ausgeführt ist.

9. Laseranordnung nach zumindest einem der vorhergehenden Ansprüche, **dadurch gekennzeichnet, dass** das Pumpabbildungssystem (25) mittels eines Spaltungsprismas (24) zur Aufteilung der mittels eines Lichtwellenleiters (4) zugeführten Pumpstrahlung in zwei Teilstrahlen ausgeführt ist.

10. Laseranordnung nach zumindest einem der vorhergehenden Ansprüche, **dadurch gekennzeichnet, dass** die Laseranordnung zumindest zwei V-Anordnungen umfasst, welche durch einen zusätzlichen Faltungsspiegel (3') optisch gekoppelt sind.

11. Laseranordnung nach zumindest einem der vorhergehenden Ansprüche, **dadurch gekennzeichnet, dass** die Laseranordnung zwei V-Anordnungen, die in insbesondere senkrecht zueinander liegenden Ebenen X, Y orientiert und durch zusätzliche Faltungsspiegel (3', 3") optisch gekoppelt sind, und ein für beide V-Anordnungen gemeinsames Objektiv (11) umfasst.

12. Laseranordnung nach zumindest einem der vorhergehenden Ansprüche, **dadurch gekennzeichnet, dass** in einem Resonatorzweig (1a) des Resonators zumindest ein Q-Switch-Modulator (21) zur Erzeugung gepulster Laserstrahlung angeordnet ist.

13. Laseranordnung nach zumindest einem der vorhergehenden Ansprüche, **dadurch gekennzeichnet, dass** in einem Resonatorzweig (1b) des Resonators zumindest ein Modul (22) mit zumindest einem nichtlinearen Element (23) zur Erzeugung zumindest einer höheren Harmonischen angeordnet ist.

## Claims

1. Laser arrangement, in particular a longitudinally diode-pumped solid-state laser having at least one active medium (2a, 2b, 19, 20) and at least one V-arrangement of two resonator branches (1a, 1b), connected via a folding element (9, 18) highly reflective at the fundamental wavelength, of the optical resonator, the laser arrangement further comprising an optical pump-imaging system (25);
wherein the two resonator branches (1a, 1b) are respectively assigned an active volume (26a, 26b), and both are pumped at one end through a common objective (11, 17) of the pump-imaging system (25) by the folding element (9, 18) transparent to the pump wavelength, wherein the at least one active medium (2a, 2b, 19, 20) has planar end faces and the folding element (9, 18) for reducing the optical force of the thermal lens in the optical resonator is implemented in a spherical convex manner and wherein either a common active medium (19) has two active volumes (26a, 26b) which are positioned and aligned centrally and coaxially with the optical axis (27a, 27b) of the relevant resonator branch (1a, 1b), and the active medium (19) comprises the two resonator branches (1a, 1b) or each resonator branch (1a, 1b) has in each case an active medium (2a, 2b), wherein the active volume (26a, 26b) assigned to a respective resonator branch (1a, 1b) is positioned and aligned centrally and coaxially with the optical axis (27a, 27b) of the relevant resonator branch (1a, 1b).

2. Laser arrangement according to Claim 1, **characterized in that** the folding element (9) is designed as a highly reflective surface of the outer side of the objective (11).

3. Laser arrangement according to Claim 1 or 2, **characterized in that** the folding element (18) is designed as a mirror, in particular as a meniscus mirror.

4. Laser arrangement according to at least one of the preceding claims, **characterized in that** the pump-imaging system (25) comprises at least one collimating optics (5a, 5b).

5. Laser arrangement according to at least one of the preceding claims, **characterized in that** the pump-imaging system (25) comprises at least one focusing optics (6a, 6b) for generating an intermediate image.

6. Laser arrangement according to at least one of the preceding claims, **characterized in that** the pump power can be supplied by means of separate optical fibres (4a, 4b, 4a', 4b').

7. Laser arrangement according to at least one of the preceding claims, **characterized in that** the pump-imaging system (25) has at least one deflecting element (12), for example deflecting mirror (13a, 13b), prisms (14) or optical wedges (16a, 16b).

8. Laser arrangement according to at least one of the preceding claims, **characterized in that** the pump power is supplied by means of parallel optical fibres (4a, 4b), in particular having end faces of the optical fibres (4) arranged in a plane, and the objective (11) is designed as an object-side telecentric imaging optics.

9. Laser arrangement according to at least one of the preceding claims, **characterized in that** the pump-imaging system (25) is designed to use a splitting prism (24) to split up into two component beams the pump radiation supplied by means of an optical fibre (4).

10. Laser arrangement according to at least one of the preceding claims, **characterized in that** the laser arrangement comprises at least two V-arrangements which are optically coupled by an additional folding mirror (3').

11. Laser arrangement according to at least one of the preceding claims, **characterized in that** the laser arrangement comprises two V-arrangements, which are orientated in planes X, Y lying perpendicular to one another, in particular, and are optically coupled by additional folding mirrors (3', 3"), and comprises an objective (11) common to both V-arrangements.

12. Laser arrangement according to at least one of the preceding claims, **characterized in that** at least one Q-switch modulator (21) for producing pulsed laser radiation is arranged in a resonator branch (1a) of the resonator.

13. Laser arrangement according to at least one of the preceding claims, **characterized in that** at least one module (22) with at least one non-linear element (23) for generating at least one higher harmonic is arranged in one resonator branch (1b) of the resonator.

## Revendications

1. Ensemble de laser, en particulier pour un laser longitudinal à l'état solide pompé par diode, présentant au moins un milieu actif (2a, 2b, 19, 20) et au moins un agencement en V de deux branches (1a, 1b) de résonateur optique reliées par un élément de convolution (9, 18) à haute réflexion pour la longueur d'onde de base, l'ensemble de laser comprenant de plus un système optique (25) d'imagerie de pompage,
des volumes actifs (26a, 26b) étant associés respectivement à chacune des deux branches (1a, 1b) du résonateur, les deux étant pompés d'un côté au moyen d'un objectif commun (11, 17) du système (25) d'imagerie de pompage par l'élément de convolution (9, 18) transparent pour la longueur d'onde de pompage,
le ou les milieux actifs (2a, 2b, 19, 20) présentant des surfaces frontales planes et l'élément de convolution (9, 18) étant sphériquement convexe pour réduire la force optique de la lentille thermique du résonateur optique ou
un milieu actif commun (19) présentant deux volumes actifs (26a, 26b) positionnés et orientés centralement et coaxialement par rapport à l'axe optique (27a, 27b) de la branche concernée (1a, 1b) du résonateur,
le milieu actif (19) comprenant les deux branches (1a, 1b) du résonateur ou
chaque branche (1a, 1b) du résonateur présentant un milieu actif (2a, 2b) respectif, le volume actif (26a, 26b) associé à chaque branche (1a, 1b) de résonateur étant positionné et orienté centralement et coaxialement par rapport à l'axe optique (27a, 27b) de la branche (1a, 1b) concernée du résonateur.

2. Ensemble de résonateur selon la revendication 1, **caractérisé en ce que** l'élément de convolution (9) est réalisé sous la forme d'une surface hautement réfléchissante située sur le côté extérieur de l'objectif (11).

3. Ensemble de résonateur selon les revendications 1 ou 2, **caractérisé en ce que** l'élément de convolution (18) est réalisé sous la forme d'un miroir et en particulier d'un miroir à ménisque.

4. Ensemble de laser selon au moins l'une des revendications précédentes, **caractérisé en ce que** le système (25) d'imagerie de pompage comporte au moins une optique de collimation (5a, 5b).

5. Ensemble de laser selon au moins l'une des revendications précédentes, **caractérisé en ce que** le système (25) d'imagerie de pompage comporte au moins une optique de focalisation (6a, 6b) destinée à former une image intermédiaire.

6. Ensemble de laser selon au moins l'une des revendications précédentes, **caractérisé en ce que** la puissance de pompage peut être apportée au moyen de guides d'ondes lumineuses (4a, 4b, 4a', 4b') séparés.

7. Ensemble de laser selon au moins l'une des revendications précédentes, **caractérisé en ce que** le système (25) d'imagerie de pompage présente au moins un élément de déviation (12), par exemple des miroirs de renvoi (13a, 13b), des prismes (14) ou des biseaux optiques (16a, 16b).

8. Ensemble de laser selon au moins l'une des revendications précédentes, **caractérisé en ce que** l'apport de la puissance de pompage est réalisé au moyen de guides parallèles (4a, 4b) d'ondes lumineuses, en particulier par des surfaces frontales des guides (4) d'ondes lumineuses disposées dans un plan, l'objectif (11) étant réalisé sous la forme d'une optique d'imagerie télécentrique côté objet.

9. Ensemble de laser selon au moins l'une des revendications précédentes, **caractérisé en ce que** le système (25) d'imagerie de pompage est réalisé au moyen d'un prisme de division (24) qui divise le rayonnement de pompage apporté au moyen d'un guide (4) d'ondes lumineuses en deux rayons partiels.

10. Ensemble de laser selon au moins l'une des revendications précédentes, **caractérisé en ce que** l'ensemble de laser comporte au moins deux ensembles en V couplés optiquement par un miroir de convolution (3') supplémentaire.

11. Ensemble de laser selon au moins l'une des revendications précédentes, **caractérisé en ce que** l'ensemble de laser comporte deux ensembles en V qui sont orientés dans des plans X, Y situés en particulier perpendiculairement l'un à l'autre et qui sont couplés optiquement par des miroirs supplémentaires de convolution (3', 3''), et un objectif (11) commun pour les deux ensembles en V.

12. Ensemble de laser selon au moins l'une des revendications précédentes, **caractérisé en ce que** dans une branche (1a) du résonateur, au moins un modulateur (21) dit à commutation Q est disposé pour former un rayonnement laser pulsé.

13. Ensemble de laser selon au moins l'une des revendications précédentes, **caractérisé en ce que** dans une branche (1b) du résonateur, au moins un module (22) qui présente au moins un élément non linéaire (23) est disposé pour former au moins une harmonique d'ordre supérieur.
